# EUROPÄISCHE PATENTSCHRIFT

(11) **EP 3 665 763 B1**
(45) Veröffentlichungstag und Bekanntmachung des Hinweises auf die Patenterteilung: **12.10.2022**
(21) Anmeldenummer: 18752459.0
(22) Anmeldetag: 06.08.2018
(51) Int. Cl.: H02K 11/01

(54) **VORRICHTUNG ZUR REDUZIERUNG VON SCHÄDLICHEN LAGERSPANNUNGEN**
DEVICE FOR REDUCING HARMFUL BEARING VOLTAGES
DISPOSITIF POUR LA RÉDUCTION DE TENSIONS DE PALIER PRÉJUDICIABLES

(30) Priorität: 09.08.2017 DE 102017118125
(43) Veröffentlichungstag der Anmeldung: 17.06.2020
(73) Patentinhaber: EBM-Papst Mulfingen GmbH&CO. KG, 74673 Mulfingen (DE)
(72) Erfinder: SCHROTH, Sebastian, 74635 Kupferzell (DE); WALTER, Manuel, 74523 Schwäbisch Hall (DE)
(74) Vertreter: Staeger & Sperling Partnerschaftsgesellschaft mbB
(86) Internationale Anmeldenummer: PCT/EP2018/071296
(87) Internationale Veröffentlichungsnummer: WO 2019/030181

(56) Entgegenhaltungen:
- WO-A2-2016/091360
- DE-A1-102015 112 146
- DE-C1- 19 948 145
- US-A- 5 661 353
- SCHROTH SEBASTIAN ET AL: "Impact of stator grounding in low power single-phase EC-motors", 2014 IEEE APPLIED POWER ELECTRONICS CONFERENCE AND EXPOSITION - APEC 2014, IEEE, 16. März 2014 (2014-03-16), Seiten 783-790, XP032591158, DOI: 10.1109/APEC.2014.6803397 [gefunden am 2014-04-21]

## Beschreibung

Die vorliegende Erfindung betrifft eine Vorrichtung zur Reduzierung von unerwünschten Lagerspannungen in einer elektrischen Maschine, wie z. B. einem EC-Motor.

Drehzahlveränderbare Motoren werden heute überwiegend von Spannungszwischenkreisumrichtern gespeist. Die Speisung durch den Spannungszwischenkreisumrichter kann jedoch zu unerwünschten Lagerspannungen führen, was wiederum zu schädigenden Lagerströmen in den Lagern des Motors führt. Ein solcher Stromfluss durch die Lager kann bei elektrischen Maschinen mit Wälz- und Gleitlagern zu Schäden bis hin zum totalen Ausfall führen.

Als Abhilfe wurden in der Vergangenheit hierzu stromisolierte bzw. elektrisch isolierende Lager, z. B. Lager mit einer Keramikisolierung am Außenring oder Hybridlager mit Keramik-Walzkörpern, verwendet. Da diese Lager jedoch sehr teuer sind, eignet sich eine solche Lösung nicht in idealer Weise für die Massenfertigung.

Aus dem Stand der Technik sind weitere Abhilfemaßnahmen bekannt. So lehren die Druckschriften EP 1 445 850 A1 bzw. DE 10 2004 016 738 B3 eine Vorrichtung zum Schutz eines Lagers einer Elektromaschine zu verwenden, die eine Kompensationsanordnung bzw. eine Kompensationseinrichtung zur Erzeugung eines Kompensationsstroms für die Kompensation eines Störstroms durch die Lager vorsieht.

Bei Speisung einer elektrischen Maschine aus einem Pulswechselrichter entsteht eine kapazitiv eingekoppelte Lagerspannung. Durch das geschaltete Pulsmuster des Inverters ergibt sich an dessen Ausgang eine mit der Schaltfrequenz des Inverters springende Gleichtaktspannung (CMV) gegenüber Erde.

Die DE 20 2015 103902 U beschäftigt sich mit der daraus resultierenden Problematik, nämlich dass sich eine Spannung zwischen dem Lagerinnen- und Lageraußenring und der auf einem isolierenden Ölfilm laufenden Kugel des Lagers ausbildet. Kommt es aufgrund unzureichender Isolationsstärke des Ölfilms, bzw. zu hohen Lagerspannungen zu einem Durchschlag der Isolation, so entlädt sich die Ölfilmkapazität sowie weitere parallele parasitäre Kapazitäten des Gesamtaufbaus und es findet ein Ausgleich der Ladungsträger zwischen Lagerinnen- und Lageraußenring statt (electric discharge machining), was zu Lagerschäden führen kann.

Die DE 20 2015 103902 U schlägt hierzu das Einbringen einer Kapazität bei gleichzeitiger Isolation des Stators vor, welche deutlich größer gewählt wird als die parasitär entstehenden Kondensatoren im restlichen Netzwerk. Aufgrund dieser Maßnahme wird der Stator im relevanten Frequenzbereich nahezu mit Massepotential (GND), vorzugsweise dem Massepotential des Wechselrichters verbunden. Eine Verbindung zwischen dem festen Elektronikpotential und Schutzleiter bzw. Erde wird überwiegend durch die im EMV-Filter verbauten Y-Kondensatoren hergestellt. Die Verbindung kann aufgrund der großen Kapazitäten des EMV-Filters für Frequenzbereiche, in denen durch PWM Taktung Lagerspannungen verursacht werden, nahezu als Kurzschluss betrachtet werden. Über die weiteren vorhandenen Kapazitäten kann sich dennoch sowohl am Lageraußenring, als auch am Rotor, bzw. dem damit leitfähig verbundenen Lagerinnenring einer Spannung aufbauen, so dass die Lösung der DE 20 2015 103902 U das der Erfindung zu Grunde liegende Problem nur teilweise beseitigt.

Liegen zwischen dem Lageraußenring und dem Lagerinnenring bzw. dem damit leitfähig verbundenen Rotor solche Spannungen an, die über der Isolationsfestigkeit des Schmierfilms zwischen Lauffläche und Kugel liegen, kommt es zum Durchschlag und zu einem Aufrauhen der Laufflächen.

Weiterer druckschriftlicher Stand der Technik im vorliegenden technischen Gebiet, welcher den Oberbegriff des Anspruchs 1 widerspiegelt, ist in den Druckschriften DE 10 2015 112 146 A1 und WO 2016/091360 A2 offenbart.

Der Erfindung liegt deshalb die Aufgabe zugrunde, vorgenannte Probleme zu überwinden und eine Lösung bereit zu stellen, mit welcher die unerwünschten Lagerspannungen und daraus resultierenden Lagerströme wirksam reduziert oder ganz unterbunden werden können.

Diese Aufgabe wird mittels einer Vorrichtung mit den Merkmalen von Anspruch 1 gelöst.

Der Grundgedanke der Erfindung ist darin zu sehen, dass durch eine Kombination einer Schirmung und durch spezifische Anpassung des Kapazitätsnetzwerks einer elektrischen Maschine oder Motors die Potentiale von Lageraußenring und Lagerinnenring reduziert werden.

Eine Maßnahme ist dabei, den einen Schirm sowie den Stator des Motors gezielt über eine Impedanz oder Kapazität an ein zum Zwischenkreis der Elektronik festes Potential anzubinden. Die Einbringung des Schirms erfolgt dergestalt, um die Wicklungen des Stators herum, dass er die kapazitiven Kopplungen zwischen den Wicklungen, dem Lageraußenring und dem Stator, sowie dem Rotor reduziert.

Durch das Anbinden des Schirms und des Stators an ein festes Potential, bevorzugt an Masse, schließen sich die Rückströme zur Elektronik hin und es wird kein unerwünschter Ableitstrom über die Lager erzeugt. Des Weiteren reduziert der Schirm auch die Lagerspannung als solche.

Der Schirm wird erfindungsgemäß so im Motor ausgebildet, dass er die kapazitiven Kopplungen zwischen der Wicklung und dem jeweiligen Lageraußenring sowohl rotor- als auch statorseitig als auch die kapazitive Kopplung zwischen den Wicklungen und dem Rotor signifikant reduziert mit der Folge, dass die kapazitive Einkopplung von Gleichtaktspannungen zwischen den Wicklungen und den Lageraußenringen, sowie zwischen den Wicklungen und dem Rotor reduziert wird.

Erfindungsgemäß wird demnach eine Vorrichtung zur Reduzierung von schädlichen Lagerspannungen in einer, von einer Zwischenkreisspannung eines Zwischenkreises gespeisten, elektrischen Maschine vorgeschlagen, umfassend einen Wicklungen aufweisenden Stator und einen Rotor, wobei zwischen dem Rotor und dem Stator wenigstens zwei Lager bestehend aus je einem Lageraußenring und je einem Lagerinnenring vorgesehen sind, und wobei die Vorrichtung eine Schirmungsanordnung umfasst, die wenigstens zwischen den Wicklungen des Stators und den jeweiligen Lageraußenringen vorgesehen ist und wobei ferner eine elektrische Verbindungsanordnung des Stators an ein zum Zwischenkreis festes Potential vorgesehen ist. Ferner ist die die Schirmungsanordnung mit dem Stator über eine elektrische Verbindungsanordnung unmittelbar oder mittelbar über eine Impedanz oder eine Kapazität verbunden.

Erfindungsgemäß ist vorgesehen, dass die Verbindungsanordnung des Stators an ein zum Zwischenkreis festes Potential über eine Impedanz oder über eine Kapazität erfolgt. In einer vorteilhaften Ausführungsform der Erfindung ist das feste Potential das Massebezugspotential (GND) der Kommutierungselektronik bzw. des Wechselrichters ist.

In einer anderen Ausgestaltung der Erfindung ist die Schirmungsanordnung mit dem Erdpotential (PE) verbunden, wodurch sich dann jedoch die EMV leicht verschlechtert, aber im Ergebnis eine Reduktion der Lagerspannung erreicht wird. Hierzu ist es jedoch notwendig, dass der Stator an ein festes Elektronikpotential bevorzugt an Masse angebunden ist.

In einer vorteilhaften Ausgestaltung der Erfindung ist vorgesehen, dass die Schirmungsanordnung über eine Verbindungsanordnung mit einem gegenüber dem Erdpotential (PE) festen Potential oder dem gleichen festen Potential wie der Stator elektrisch verbunden ist. Wird der Stator an Masse angeschlossen und der Lagerschirm an den gemassten Stator angebunden, so fliest ein Hauptanteil der Störungen zur Elektronik und nicht zur Erde zurück, wodurch sich zum einen die Lagerspannung reduziert und zum anderen die EMV verbessert. Als weiterer Vorteil dieser Lösung kann dadurch eine Kontaktierung der Schirmungsanordnung an die Elektronik eingespart werden.

Eine ebenso vorteilhafte Ausgestaltung der Vorrichtung sieht vor, dass die Verbindungsanordnung der Schirmungsanordnung über eine Kapazität/Impedanz an ein gegenüber Erde stabiles Elektronikpotential angebunden wird. In diesem Fall kann die Statoranbindung aufgehoben werden und der Stator muss nicht zwingend geerdet, oder auf einem anderen gegenüber Erde stabilen Potential angebunden sein.

Die Schirmungsanordnung ist bevorzugt so ausgebildet, dass diese die kapazitiven Kopplungen zwischen Wicklung- und Lageraußenring sowie die Kopplung zwischen Wicklung und Rotor deutlich reduziert, wozu die Schirmungsanordnung wenigstens einen den Wickelkopf der jeweiligen Wicklungen abdeckenden Schirmabschnitt aufweist.

Weiter vorteilhaft ist es, wenn die Schirmungsanordnung Schirmabschnitte zwischen dem Lageraußenring und den Wicklungen, vorzugsweise zum Einbringen in entsprechende Lagertaschen, aufweist.

Es ist darüber hinaus weiter von Vorteil, wenn die Schirmungsanordnung auch eine Anzahl an Schirmabschnitten, vorzugsweise entsprechend der Anzahl der Nuten des Rotors zur Schirmung zwischen den Nuten aufweist. Diese Schirmabschnitte können sich als Stege von einem oberen den Wickelkopf abdeckenden Abschnitt zu einem entsprechenden unteren Schirmungsabschnitt entlang der Nuten erstrecken, wobei bei Verwendung von mehr als einem Nutsteg eine elektrisch trennende Verbindung zwischen den Stegen vorhanden sein muss, um Wirbelstromeffekten aufgrund des rotierenden magnetischen Feldes zu unterdrücken.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine Schnittansicht durch einen Motor gemäß einer ersten Ausführungsform der Erfindung,
- Fig. 2: eine Darstellung eines Ausführungsbeispiels einer Schirmungsanordnung,
- Fig. 3: ein Ersatzschaltbild des Kapazitätsnetzwerkes für eine erste Ausführungsform der Erfindung und
- Fig. 4: ein Ersatzschaltbild des Kapazitätsnetzwerkes für eine alternative Ausführungsform der Erfindung.

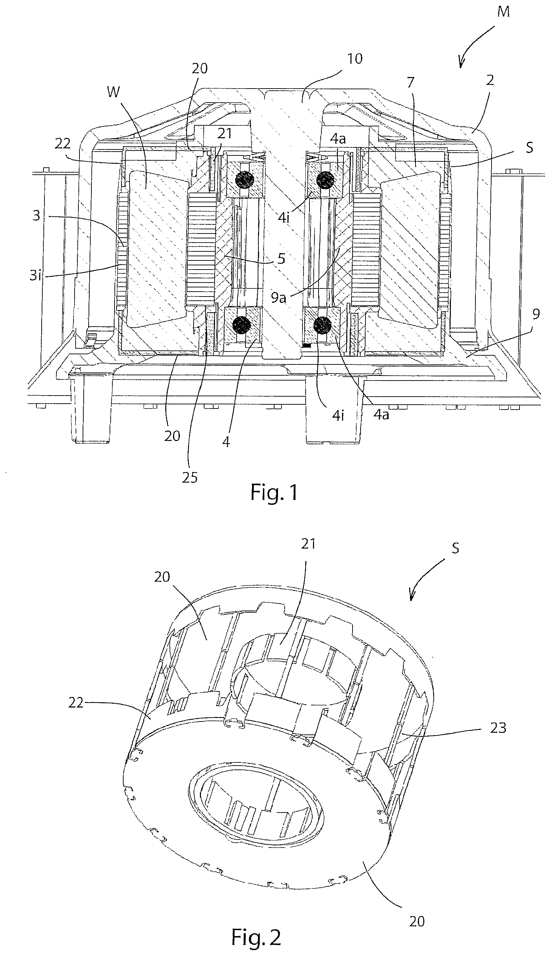

Die Erfindung wir nachfolgend anhand bevorzugter Ausführungsbeispiele mit Bezug auf die Figuren 1 bis 4 näher beschrieben, wobei gleiche Bezugszeichen auf gleiche funktionale und/oder strukturelle Merkmale hinweisen.

In der Figur 1 ist eine Schnittansicht durch einen Elektromotor M mit einer Vorrichtung zur Reduzierung von schädlichen Lagerspannungen an den Lagern 4, bestehend aus dem Lageraußenring 4a und dem Lagerinnenring 4i gemäß einer beispielhaften Ausführungsform der Erfindung dargestellt.

Der Motor M besitzt einen Rotor 2 und einen Stator 3 gebildet aus Statorblechen 3i. Zwischen dem Rotor 2 und dem Stator 3 ist jeweils ein rotorseitiger und statorseitiger Lageraußenring 4a und je ein Lagerinnenring 4i vorgesehen. Weiter dargestellt sind die Welle 10 und die Wicklungen W des Motors M. Um die Wicklungen W herum ist ein isolierender Verguss 9 angebracht sowie entlang der Statorbleche 3i eine isolierende Umspritzung 9a.

Liegt nun eine Gleichtaktspannung U_{CM} an den Wicklungen W an, so entsteht an jedem der Lager 4 aufgrund der kapazitiven Kopplung zur Wicklung W ein Lagerpotential gegenüber dem Erdpotential PE, welches durch die nachfolgend beschrieben Maßnahmen signifikant reduziert wird.

Die in der Figur 1 gezeigte Vorrichtung zur Reduzierung von Lagerspannungen umfasst eine Schirmungsanordnung S, die in der Figur 2 in einer perspektivischen Ansicht gezeigt ist. Die Schirmungsanordnung S ist zwischen den Wicklungen W des Stators 3 und den jeweiligen Lageraußenringen 4a vorgesehen.

Wie in den Figuren 1 und 2 weiter ersichtlich, weist die Schirmungsanordnung S einen den Wickelkopf 7 der Wicklungen W abdeckenden Schirmabschnitt 20 jeweils oben und unten auf. Die Schirmungsanordnung S hat eine im wesentlichen zylinderförmige Hüllform bestehend aus den genannten Schirmungsabschnitten 20 sowie den weiteren Schirmabschnitten 21 zwischen dem Lageraußenring 4a und den Wicklungen W, die im montierten Zustand der Schirmungsanordnung S in Lagertaschen angeordnet sind. Ferner weist die Schirmungsanordnung S eine Mehrzahl umlaufend im Nutabstand angebrachte Schirmabschnitte 23 auf, die der Schirmung in den Nutzschlitzen zwischen den Blechpaketen 3i des Stators 3 dienen.

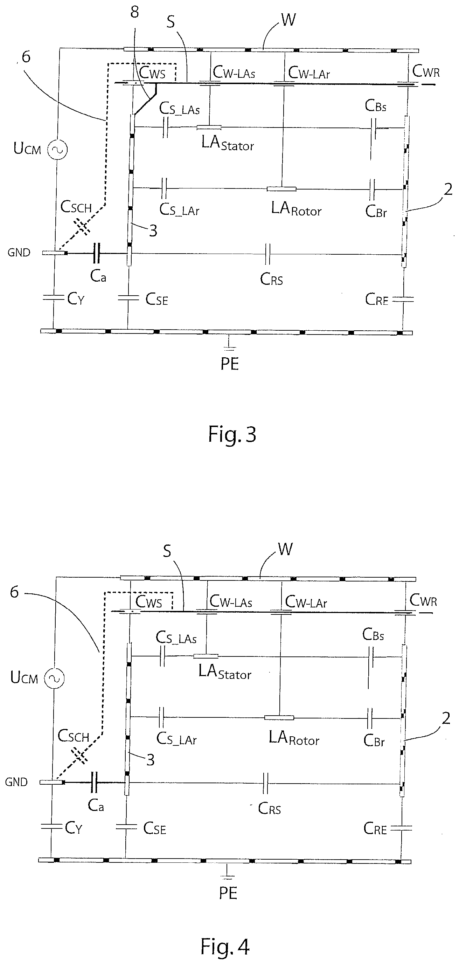

In den Figuren 3 und 4 sind Ersatzschaltbilder für beispielhafte Ausführungsformen der Erfindung gezeigt. Das jeweilige Ersatzschaltbild repräsentiert das Kapazitätsnetzwerk für die entsprechenden Ausführungen mit den systembedingten Kapazitäten C_{ws}, C_{W-LAs}, C_{W-LAr}, C_{WR}, C_{BS}, C_{BR}, C_{RS}, C_{RE}, C_{SE}, C_{Y}, C_{S-LAS}, C_{S-LAr}., jeweils repräsentierend beispielhaft die Kapazitäten zwischen W = Wicklung, LA= Lageraußenring (r=rotorseitig, s= statorseitig), R = Rotor, S = Stator sowie weiterer Kapazitäten zwischen den jeweiligen Bauteilen des Motors auf die jedoch nicht näher eingegangen wird. Ferner ist das Potential PE der Schutzerde in dem Netzwerk dargestellt, sowie das Massebezugspotential GND und die Gleichtaktspannung U_{CM}.

Erfindungsgemäß kann nun eine Verbindungsanordnung 5 des Stators 3 an ein zum Zwischenkreis festes Potential über eine Impedanz oder eine Kapazität Cₐ erfolgen, wie dies in beiden Ausführungen nach den Figuren 3 und 4 gezeigt ist.

Das feste Potential ist vorliegend das Massebezugspotential GND des Wechselrichters/Inverters. Die Schirmungsanordnung S ist mit dem Stator 3 über eine elektrische Verbindungsanordnung 8 unmittelbar verbunden.

In der Ausgestaltung gemäß der Figur 4 ist die Schirmungsanordnung S über eine Verbindungsanordnung 6 mit einem gegenüber dem Erdpotential (PE) festen Potential und zwar dem gleichen Potential wie der Stator 3, nämlich dem Massebezugspotential GND elektrisch verbunden ist. Die Verbindung der Schirmungsanordnung S an dem Massebezugspotential GND erfolgt dabei über eine Kapazität C_{SCH}. In Fig.3 kann die Kapazität C_{SCH} optional eingebaut werden.

## Patentansprüche

1. Vorrichtung zur Reduzierung von schädlichen Lagerspannungen in einer, von einer Zwischenkreisspannung eines Zwischenkreises gespeisten, elektrischen Maschine (M) umfassend einen Wicklungen (W) aufweisenden, gegenüber Erde isolierten Stator (3) und einen Rotor (2), wobei zwischen Rotor (2) und Stator (3) wenigstens zwei Lager (4) bestehend aus je einem Lageraußenring (4a) und je einem Lagerinnenring (4i) vorgesehen sind, und wobei ferner eine elektrische Verbindungsanordnung (5) des Stators (3) an ein zum Zwischenkreis festes Potential vorgesehen ist, wobei die Verbindungsanordnung (5) des Stators (3) an ein zum Zwischenkreis festes Potential über eine Impedanz oder eine Kapazität (Cₐ) erfolgt,
**dadurch gekennzeichnet, dass** die Vorrichtung eine Schirmungsanordnung (S) umfasst, die wenigstens zwischen den Wicklungen (W) des Stators (3) und den jeweiligen Lageraußenringen (4a) vorgesehen ist und die Schirmungsanordnung (S) mit dem Stator (3) über eine elektrische Verbindungsanordnung (8) unmittelbar oder mittelbar über eine Impedanz oder eine Kapazität verbunden ist.

2. Vorrichtung gemäß Anspruch 1, **dadurch gekennzeichnet, dass** das feste Potential das Massebezugspotential (GND) der Kommutierungselektronik bzw. des Wechselrichters ist.

3. Vorrichtung gemäß dem Anspruch 2, **dadurch gekennzeichnet, dass** die Schirmungsanordnung (S) mit dem Erdpotential (PE) verbunden ist.

4. Vorrichtung gemäß Anspruch 1 oder 2, **dadurch gekennzeichnet, dass** die Schirmungsanordnung (S) über eine Verbindungsanordnung (6) mit einem gegenüber dem Erdpotential (PE) festen Potential oder dem gleichen festen Potential wie der Stator (3) elektrisch verbunden ist.

5. Vorrichtung nach Anspruch 4, **dadurch gekennzeichnet, dass** die Verbindungsanordnung (6) der Schirmungsanordnung (S) an einem festen Potential über eine Impedanz oder eine Kapazität (C_{SCH}) erfolgt.

6. Vorrichtung gemäß einem der vorhergehenden Ansprüche, **dadurch gekennzeichnet, dass** die Schirmungsanordnung (S) wenigstens einen den Wickelkopf (7) der Wicklungen (W) abdeckenden Schirmabschnitt (20) aufweist.

7. Vorrichtung gemäß einem der vorhergehenden Ansprüche, **dadurch gekennzeichnet, dass** die Schirmungsanordnung (S) wenigstens Schirmabschnitte (21) zwischen dem Lageraußenring (4a) und den Wicklungen (W), vorzugsweise in Lagertaschen, aufweist.

8. Vorrichtung gemäß einem der vorhergehenden Ansprüche, **dadurch gekennzeichnet, dass** die Schirmungsanordnung (S) eine Anzahl an Schirmabschnitten (23), vorzugsweise entsprechend der Anzahl der Nuten zur Schirmung zwischen den Nuten aufweist.

## Claims

1. A device for reducing harmful bearing voltages in an electrical machine (M) fed by a DC link voltage of a DC link, comprising a stator (3) which has windings (W) and is isolated from ground, and a rotor (2), wherein at least two bearings (4) consisting of an outer bearing ring (4a) and an inner bearing ring (4i) are provided between the rotor (2) and the stator (3), and wherein further an electrical connecting arrangement (5) of the stator (3) to a potential which is stable with respect to the DC link is provided, wherein the connecting arrangement (5) of the stator (3) to a potential which is stable with respect to the DC link is established via an impedance or a capacitance (Cₐ), **characterized in that** the device includes a shielding arrangement (S) which is at least provided between the windings (W) of the stator (3) and the respective outer bearing rings (4a) and the shielding arrangement (S) is connected to the stator (3) directly or indirectly via an impedance or a capacitance via an electrical connecting arrangement (8).

2. The device according to claim 1, **characterized in that** the stable potential is the ground reference potential (GND) of the commuting electronics or of the inverter.

3. The device according to claim 2, **characterized in that** the shielding arrangement (S) is connected to the ground potential (PE).

4. The device according to claim 1 or 2, **characterized in that** the shielding arrangement (S) is electrically connected via a connecting arrangement (6) to a potential which is stable with respect to the ground potential (PE) or to the same stable potential as the stator (3).

5. The device according to claim 4, **characterized in that** the connecting arrangement (6) of the shielding arrangement (S) to a stable potential is established via an impedance or capacitance (CSCH).

6. The device according to any one of the preceding claims, **characterized in that** the shielding arrangement (S) at least comprises a shielding section (20) covering the winding head (7) of the windings (W).

7. The device according to any one of the preceding claims, **characterized in that** the shielding arrangement (S) at least comprises shielding sections (21) between the outer bearing ring (4a) and the windings (W), preferably in bearing pockets.

8. The device according to any one of the preceding claims, **characterized in that** the shielding arrangement (S) comprises a number of shielding sections (23) for shielding between grooves, preferably as many as the number of grooves.

## Revendications

1. Dispositif permettant de réduire des tensions de palier préjudiciables dans une machine électrique (M) alimentée par une tension de circuit intermédiaire d'un circuit intermédiaire, comprenant un stator (3) isolé de la terre et présentant des enroulements (W) et un rotor (2), dans lequel au moins deux paliers (4) composés chacun d'une bague de palier extérieure (4a) et d'une bague de palier intérieure (4i) sont prévus entre le rotor (2) et le stator (3), et dans lequel en outre un agencement de liaison électrique (5) du stator (3) à un potentiel fixe par rapport au circuit intermédiaire est prévu, l'agencement de liaison (5) du stator (3) étant réalisé à un potentiel fixe par rapport au circuit intermédiaire par l'intermédiaire d'une impédance ou d'un condensateur (Cₐ),
**caractérisé en ce que** le dispositif comprend un agencement de blindage (S) qui est prévu au moins entre les enroulements (W) du stator (3) et les bagues de palier extérieures (4a) respectives, et l'agencement de blindage (S) est relié au stator (3) directement ou indirectement par un agencement de liaison électrique (8) par l'intermédiaire d'une impédance ou d'un condensateur.

2. Dispositif selon la revendication 1, **caractérisé en ce que** le potentiel fixe est le potentiel de référence de masse (GND) de l'électronique de commutation ou de l'onduleur.

3. Dispositif selon la revendication 2, **caractérisé en ce que** l'agencement de blindage (S) est relié au potentiel de terre (PE).

4. Dispositif selon la revendication 1 ou 2, **caractérisé en ce que** l'agencement de blindage (S) est relié électriquement par un agencement de liaison (6) à un potentiel fixe par rapport au potentiel de terre (PE) ou au même potentiel fixe que le stator (3).

5. Dispositif selon la revendication 4, **caractérisé en ce que** l'agencement de liaison (6) de l'agencement de blindage (S) est réalisé à un potentiel fixe par l'intermédiaire d'une impédance ou d'un condensateur (C_{SCH}).

6. Dispositif selon l'une quelconque des revendications précédentes, **caractérisé en ce que** l'agencement de blindage (S) présente au moins une partie de blindage (20) recouvrant la tête d'enroulement (7) des enroulements (W).

7. Dispositif selon l'une quelconque des revendications précédentes, **caractérisé en ce que** l'agencement de blindage (S) présente au moins des parties de blindage (21) entre la bague de palier extérieure (4a) et les enroulements (W), de préférence dans des poches de palier.

8. Dispositif selon l'une quelconque des revendications précédentes, **caractérisé en ce que** l'agencement de blindage (S) présente un nombre de parties de blindage (23), de préférence selon le nombre des rainures pour le blindage entre les rainures.
